# EUROPÄISCHE PATENTSCHRIFT

(11) **EP 1 304 172 B1**
(45) Veröffentlichungstag und Bekanntmachung des Hinweises auf die Patenterteilung: **13.04.2005**
(21) Anmeldenummer: 02019939.4
(22) Anmeldetag: 05.09.2002
(51) Int. Cl.: B05D 1/00, B05D 1/26

(54) **Elektrostatisches Beschichtungsverfahren**
Electrostatic coating process
Procédé de revêtement faisant intervenir des forces electrostatiques

(30) Priorität: 22.10.2001 DE 10151286
(43) Veröffentlichungstag der Anmeldung: 23.04.2003
(73) Patentinhaber: tesa AG, 20253 Hamburg (DE)
(72) Erfinder: Klose, Maren, 21217 Seevetal (DE); Neuhaus-Steinmetz, Hermann, 22926 Ahrensburg (DE); Guldbrandsen, Lars, 22115 Hamburg (DE)

(56) Entgegenhaltungen:
- EP-A- 0 707 940
- EP-A- 0 764 521
- EP-A- 0 850 747
- US-A- 3 196 063

## Beschreibung

Die Erfindung betrifft ein Verfahren zur Herstellung von bahnförmigen, zumindest zweischichtigen Produkten, insbesondere Klebebändern mit einem Trägermaterial, auf das eine Klebemasse aufgetragen ist.

Seit langem wird daran gearbeitet, Klebebänder ohne Verwendung von Lösungsmitteln herzustellen oder zumindest den Beschichtungsvorgang und die nachfolgenden Schritte lösungsmittelfrei zu gestalten. Entsprechende Produkte mit Klebeschichten auf Basis von Synthetikkautschuken sind bekannt. Dieses Produkte decken aber nur den unteren Leistungsbereich von Klebebändern ab.

Seit einigen Jahren sind auch lösungsmittelfreie Klebstoffe auf Acrylatbasis erhältlich, die als Heißschmelzklebstoff für Klebebänder weiterverarbeitet werden können. Diese erreichen üblicherweise jedoch nicht die Scherfestigkeiten wie Acrylatmassen, die in Lösungsmittel gelöst beschichtet werden. Ein wesentlicher Grund dafür ist, daß die Viskosität der Massen bei der Verarbeitung nicht zu hoch werden darf, da sonst das Aufschmelzen und das Beschichten auf einen Träger aus ökonomischer Sicht zu aufwendig ist. Die Viskosität wird wesentlich von der Moleküllänge bestimmt. Kürzere Kettenmoleküle bedingen jedoch schlechtere Scherfestigkeiten. Auch mit einer Vernetzung des Klebers nach der Beschichtung ist nur eine begrenzte Verbesserung möglich.

Bei Naturkautschuk-Klebesystemen kann man das Aufschmelzen umgehen, wenn es gelingt, die Komponenten der Masse ohne Lösungsmittel zu mischen, und wenn man die heiße Masse einem Beschichtungssystem direkt zuführt. Als Mischaggregate kommen zum Beispiel Extruder in Frage. Bei der Mischung darf der Kautschuk jedoch nur wenig abgebaut werden, da sonst die Produkteigenschaften beeinträchtigt werden.

Bei Acrylatsystemen kann man das Aufschmelzen umgehen, indem man in Lösungsmitteln oder in Wasser polymerisierte Massen inline zur Beschichtung das Lösungsmittel oder Wasser entzieht. Lösungsmittel oder Wasser kann man zum Beispiel über Vakuumzonen in einem geeignetem Extruder entziehen.

Für die Beschichtung hochviskoser Massen sind Breitschlitzschlitzdüsen geeignet. Es zeigt sich, daß sie auch für hochviskose klebende Massen wie oben beschrieben geeignet sind. Allerdings werden ab einer relativ kleinen Bahngeschwindigkeit Luftblasen zwischen der Klebemasse und dem zu beschichtenden Substrat, das typischerweise auf einer Auflagewalze beschichtet wird, eingeschlossen.

Zur Reduzierung der Blasenbildung für obige Aufgabenstellung werden auf dem Markt Blasdüsen, Saugdüsen und sogenannte Vakuumboxen empfohlen und angeboten. Mit ihrer Hilfe soll die Andruckkraft der Masse gegen das Substrat erhöht werden.

Aus der Folienherstellung (zum Beispiel EP 0 920 973 A2) sind Draht-, Messer- und Nadelelektroden, die quer zur Bahn angeordnet sind, bekannt, mit denen elektrische Ladungen auf die aufzulegende Masse gebracht werden. Hierdurch wird die Masse durch elektrostatische Kräfte gegen eine Metallwalze gepreßt.

In der Literatur werden für die oben beschriebene Beschichtung von Substraten aufwendige Lösungen angegeben, bei denen das Substrat vor dem Auflegen auf die Kühlwalze in mehrstufigen Vorprozessen aufgeladen, durch Erwärmung teilweise entladen und gekühlt wird, um letztendlich eine gleichmäßige Aufladung des Substrates auf der Auflegewalze zu erhalten (zum Beispiel EP 0 299 492 A2).

Die maximale Ladungsmenge auf dem Substrat ist hierbei jedoch relativ gering, da sie schon beim Verlassen der Aufladungswalze soweit reduziert wird, bis durch die aus der Ladungsdichte resultierende elektrische Feldstärke keine Ionisation der Luft mehr stattfindet.

In der DE 199 05 935 A1 ist ein Verfahren zur Herstellung einer Beschichtung von lösungsmittelfreien Haftklebesystemen auf insbesondere releasebeschichteten Substraten offenbart, wobei
- auf eine rotierende Walze das Haftklebesystem in einer oder mehreren Lagen mittels eines Klebstoffauftragswerks aufgebracht wird,
- das auf der Walze befindliche Haftklebesystem in einer Bestrahtungsvornchtung durch energiereiche Strahlung, und zwar mit Hilfe von Elektronenstrahlen (ES), UVoder IR-Strahlen, vemetzt wird und
- an die Walze das Substrat herangeführt wird, so daß das Haftklebesystem von der Walze auf das Substrat transferiert wird und gegebenenfalls aufgerollt wird.

Typische Bestrahlungsvorrichtungen, die bei der dort gezeigten Ausgestaltung des Verfahrens zum Einsatz kommen, stellen Linearkathodensysteme, Scannersysteme beziehungsweise Multilängskathodensysteme dar, sofern es sich um Elektronenstrahlbeschleunigern handelt.
Die Beschleunigungsspannungen liegen im Bereich zwischen 40 kV und 350 kV, vorzugsweise 80 kV bis 300 kV. Die Dosisleistungen bewegen sich zwischen 5 bis 150 kGy, insbesondere 20 bis 90 kGy.
Als UV-Vernetzungsanlagen können insbesondere zwei Quecksilbermitteldrukcstrahler mit jeweils einer Leistung von 120 W/cm beziehungsweise ein Quecksilbermitteldruckstrahler mit einer Leistung von 240 W/cm zum Einsatz kommen. Als Dosen werden bevorzugt 10 bis 300 mJ/cm² eingestellt.

In der DE 199 05 935 A1 wird ein Verfahren zur Herstellung einer Beschichtung von lösungsmittelfreien Haftklebesystemen auf insbesondere releasebeschichteten Substraten beschrieben, wobei
- auf eine rotierende Walze mittels eines Fluidauftragswerk ein Fluidfilm aufgetragen wird,
- auf den Fluidfilm das Haftklebesystem in einer oder mehreren Lagen mittels eines Klebstoffauftragswerks aufgebracht wird, so daß sich der Fluidfilm zwischen Walze und Haftklebesystem befindet, und
- an die Walze das Substrat herangeführt wird, so daß das Haftklebesystem von der Walze auf das Substrat (releasebeschichtete und nicht releasebeschichtete) transferiert wird.

Das Heranführen des Substrats geschieht insbesondere über eine zweite Walze. Als Substrate finden Papiere, Folien, Non-Wovens und releasebeschichtete Materialien wie Trennpapiere, Folien und dergleichen Verwendung.
Die zweite Walze, auch als Anlegewalze bezeichnet, kann mit einem Gummiüberzug versehen sein und wird vorzugsweise mit einem Liniendruck von 50 bis 500 N/mm, insbesondere mit 100 bis 200 N/mm an die Walze angepreßt. Die Anlegewalze hat vorzugsweise eine Shore-Härte (A) von 40 bis 100, insbesondere eine Shore-Härte von 60 bis 80 shore (A).
Das Substrat wird bevorzugt so an die Walze angeführt, daß die Geschwindigkeit der Walzenoberfläche mit der des Substrats übereinstimmt. Sollte jedoch mit der Abnahme des Klebstoffilms eine Dickenverringerung angestrebt werden, kann das Substrat auch eine höhere Geschwindigkeit aufweisen.

In einer vorteilhaften Ausführungsform ist die Walze eine Stahlwalze, eine verchromte Stahlwalze, eine Gummiwalze oder eine Silikongummiwalze und/oder ist die Walze aus elastischem Material gefertigt. Des weiteren kann die Walze glatt oder eine gering strukturierte Oberfläche aufweisen.
Die Glattwalze kann vorzugsweise eine Chromschicht aufweisen. Optional kann die verchromte Stahlwalze eine hochglanzpolierte Oberfläche besitzen mit einer Rauhtiefe R_{z} < 0,02 µm.
Die Beschichtungswalze kann aber auch gummiert sein, vorzugsweise mit einer Gummihärte von 40 bis 100 shore (A), insbesondere mit einer Härte von 60 bis 80 shore (A). Der Walzenbezug kann gemäß dem Stand der Technik aus EPDM, Viton oder Silikongummi oder anderen elastischen Materialien bestehen.

Weiterhin als vorteilhaft wird herausgestellt, wenn die Walze temperierbar ist, und zwar bevorzugt in einem Bereich von -10 °C bis 200 °C, ganz besonders bevorzugt von 2 °C bis 50 °C.

Aufgabe der Erfindung ist es, die Beschichtung von insbesondere hochviskosen Massen, wie sie zur Herstellung von Klebebändern oder ähnlichen Produkten verwendet werden, unter der bevorzugten Verwendung einer Breitschlitzdüse bei ausreichend hohen Bahngeschwindigkeiten auf ein Substrat zu ermöglichen.
Dabei sollen
- keine Blasen zwischen der Masseschicht und dem Substrat eingeschlossen werden,
- keine Eigenschaften des herzustellenden Produktes qualitätsbestimmend beeinträchtigt werden,
- keine Gefährdungen für das Bedienungspersonal entstehen.

Gelöst wird diese Aufgabe durch ein Verfahren, wie es im Hauptanspruch niedergelegt ist. Die Unteransprüche beschreiben vorteilhafte Ausführungsformen des Verfahrens.

Demgemäß betrifft die Erfindung ein Verfahren zur Herstellung von bahnförmigen, zumindest zweischichtigen Produkten, bei welchem eine aus einer Auftragsvorrichtung austretende Masse als Schicht unter Aufbringung elektrostatischer Ladungen auf ein bahnförmiges Substrat aufgetragen wird, welches auf einer Transportvorrichtung geführt wird, und bei welchem das mit der Masse beschichtete Substrat vor dem Verlassen der Auftragsvorrichtung elektrostatisch neutralisiert wird.

In einer ersten bevorzugten Ausgestaltung des Verfahrens ist die Auftragsvorrichtung als Düse, insbesondere Breitschlitzdüse, ausgestaltet.
Die Transportvorrichtung wird mit der aus der Düse austretenden Masse vorzugsweise berührungsfrei beschichtet. Der Abstand der Düse zur Transportvorrichtung kann vorzugsweise 0, 01 bis 60 mm betragen, insbesondere 1 bis 30 mm.

Weiter vorzugsweise ist die Transportvorrichtung als Auflegewalze ausgestaltet, die weiter insbesondere geerdet und/oder temperierbar ausgeführt ist.

Um die Masse mit der erfindungsgemäßen Ladung versehen zu können, kann die Masse mittels zumindest einer Aufladungselektrode elektrostatisch aufgeladen werden, welche sich insbesondere über der Transportvorrichtung, bevorzugt Auflegewalze, befindet, und zwar im Bereich der Auflagelinie der Masseschicht. Mit Hilfe der Ladungen wird die Schicht auf das Substrat gedrückt.
Mit der Auflegeelektrode werden Ladungen, beispielsweise Elektronen, einseitig auf die Masse aufgebracht. An der Oberfläche der Transportvorrichtung, bevorzugt Auflegewalze, stellen sich sofort Gegenladungen ein. Aus dem daraus resultierenden Feld wirkt eine Kraft auf die Masse plus Substrat, die beide Schichten auf die Transportvorrichtung, bevorzugt Auflegewalze, drückt.

Weiterhin stellt eine hervorragende Ausgestaltung des erfinderischen Gedankens dar, wenn das mit der Masse beschichtete Substrat mittels zumindest einer Gegenladungselektrode vor dem Verlassen der Transportvorrichtung, bevorzugt Auflegewalze, elektrostatisch neutralisiert wird, wobei sich die Gegenladungselektrode ganz insbesondere über der Transportvorrichtung, bevorzugt Auflegewalze, im Bereich zwischen der Auflagelinie der Masseschicht und der Abzugslinie des beschichteten Substrats befindet.
Somit können elektrostatische Entladungen als Folge des Aufbringens von Ladungen durch die Auflegeelektrode durch Gegenladungen mit umgekehrter Polarität und geeigneter Stärke noch vor dem Verlassen des beschichteten Substrates von der bevorzugten Auflegewalze vermieden werden.

Zum Feinausgleich ist es weiterhin vorteilhaft, über der Ablöselinie des beschichteten Substrates von der bevorzugten Auflegewalze eine aktive Entladungsvorrichtung anzubringen, um durch den Prozeß bedingte Schwankungen über die Zeit und die Breite der Bahn auszugleichen.

Vorzugsweise ist die Gegenladungselektrode in Form einer "Draht-", "Messer-" und/oder "Nadefelektrode" ausgeführt, die quer zur Bahn angeordnet ist.

Ohne eine ausreichende Neutralisation der durch die Auflegeelektrode(n) auf die Bahn aufgebrachten elektrischen Ladungen kann es zu einer Coronaentladung zwischen der Auflegewalze und der Unterseite des Substrates kommen, durch die besonders antiadhäsive Eigenschaften des Substrates beeinträchtigt werden.
Zusätzlich werden durch die Coronaentladung Ladungen mit entgegengesetzter Polarität wie auf der Beschichtungsseite auf die Unterseite der Bahn transportiert. Neutralisiert man eine solche Bahn danach mit üblichen aktiven oder passiven Entladevorrichtungen, so wird zwar das meßbare elektrisches Feld eliminiert, aber es befinden sich danach immer sehr starke gleich hohe Ladungen mit entgegengesetzter Polarität auf den beiden Seiten. Wenn die elektrische Leitfähigkeit der Schichten zwischen den Ladungen gering ist, kann es zu unkontrollierbaren Entladungen in aufgewickelten Ballen kommen.

Sodann sollte, um das Substrat möglicht geringfügig zu beanspruchen, das Substrat mit einer Andruckwalze auf die Transportvorrichtung, bevorzugt Auflegewalze, gelegt und/oder mit einer Abnahmewalze von der Transportvorrichtung, bevorzugt Auflegewalze, abgenommen werden.
Vorteilhaft ist es weiter, für die bevorzugte Andruckwalze, mit der das Substrat auf die bevorzugt gewählte Auflegewalze gelegt wird, eine leitfähige elastische Beschichtung zu wählen. Kann eine leitfähige Beschichtung aus prozeßtechnischen Gründen nicht eingesetzt werden, so ist es vorteilhaft, den Walzenmantel in einem Bereich, in dem er nicht durch das Substrat abgedeckt ist, elektrostatisch zu entladen. Sonst kann die Walzenoberfläche mit jeder Umdrehung mehr elektrische Ladungen aufnehmen, bis unkontrollierte Entladungserscheinungen auftreten.

Weiterhin ist es vorteilhaft, eine Blende aus elektrisch isolierendem Material in Bahnlaufrichtung vor der Auflegeelektrode anzuordnen, wodurch der mit lonen angereicherte Raum im Bereich der Auflegeelektrode zur Düsenseite begrenzt wird. Günstig ist es zusätzlich auf der, der Auflegeelektrode abgewandten, Seite der Blende ein geerdetes elektrisch leitendes Blech anzubringen. Mit der Blende kann eine Coronaentladung vor der Auflegelinie durch die Masseschicht auf das Substrat deutlich reduziert werden.

Vorteilhaft ist auch eine Anordnung, bei der nicht nur eine Nadelelektrode als Auflegeelektrode verwendet wird, sondern zwei in Bahnrichtung direkt hintereinander und bei der die beiden Elektroden seitlich um einen halben Nadelabstand versetzt sind, wodurch die Fähigkeit der Nadelelektroden zu hohen Aufladeströmen mit einer relativ gleichmäßigen Ladungsverteilung gepaart wird. Als vorteilhaft hat sich dabei gezeigt, die vordere Elektrode mit einer kleineren Hochspannung zu belegen als die hintere.

In einer weiteren bevorzugten Ausführungsform der Erfindung wird das Substrat vor dem Beschichten elektrostatisch neutralisiert.

Um die bekannten Nachteile des Standes der Technik weiter auszuschließen, kann die elektrische Spannung der Transportvorrichtung, bevorzugt Auflegewalze, 1 bis 40 kV, insbesondere 2 bis 15 kV, betragen.

In einer weiteren bevorzugten Variante des erfindungsgemäßen Verfahrens wird die Masse auf dem Substrat vor dem Verlassen der Transporteinrichtung, bevorzugt Auflegewalze, vernetzt oder polymerisiert, insbesondere mittels Elektronenstrahlen, UV-Strahlen, sichtbarem Licht oder einer Kombination daraus und/oder thermisch.

Hervorragend verwenden läßt sich das Verfahren in den Anwendungsfällen, in denen das Substrat ein Trägermaterial für ein Klebeband und/oder die Masse eine Klebemasse ist. In diesem Falle können auch als Masse eingesetzt werden Acrylat-, Naturkautschuk-, Synthesekautschuk- oder EVA-Klebemassen.

Ebenso hervorragend verwenden läßt sich das Verfahren in den Anwendungsfällen, wenn das Substrat ein Release-Liner für ein Klebeband und die Masse eine Klebemasse ist.

Weiterhin zeigt sich, daß die Neigung zur Blasenbildung zwischen der Masse und dem Substrat zunimmt, wenn das Substrat sich vor dem Auflegen auf die Auflegewalze unkontrolliert aufgeladen hat. Problematisch ist es auch, wenn elektrostatische Entladungsvorrichtungen nicht auf der Seite der Bahn angebracht werden, auf der Aufladungen durch Trennungsvorgänge stattfinden können. Auch in diesem Fall wird zwar von außen kein elektrisches Feld mehr gemessen, aber trotzdem befinden auf beiden Seiten der Bahn gleich starke elektrische Ladungen mit entgegengesetzter Polarität. Die Höhe dieser Doppelladungen schwankt typischer Weise in Bahnrichtung und auch quer zur Bahn. Diese nicht definierten Doppelladungen reduzieren die effektiv in einem Produktionsprozeß sicher zu fahrende maximale Bahngeschwindigkeit.

In einer vorteilhaften Ausführungsform werden Entladungsvorrichtungen immer auf der Seite angebracht, auf der Ladungen durch Trennvorgänge entstehen. Bei elektrostatisch schwierigen Substraten kann es im Extremfall vorteilhaft sein, hinter jeder Umlenkwalze auf der Berührungsseite und schon im Wickelspalt bei der Abwicklung geeignete Entladungsvorrichtungen anzubringen.

Weiterhin ist es vorteilhaft, den angelieferte Ballen mit dem Substrat schon im Vorprozeß elektrostatisch kontrolliert zu fahren, oder die Zwischenlagerzeit aufgrund ausreichender elektrischer Restleitfähigkeiten groß genug zum Zusammenfließen von Doppelladungen zu wählen. Die benötigte Zeit kann auch durch Lagerung bei erhöhten Temperaturen verkürzt werden.

Besonders vorteilhaft ist, in Bahnlaufrichtung zwischen der Auftragsvorrichtung und der Auflegeelektrode eine Blende aus elektrisch isolierendem Material anzubringen, wodurch der mit lonen gefüllte Raum im Bereich der Auflegeelektrode von der Auftragsvorrichtung, insbesondere Düse, der Transportvorrichtung, insbesondere Auflegewalze, und der Blende begrenzt wird.

Für den Fachmann unerwartet bietet das erfinderische Verfahren eine Lösung für die gestellten Aufgaben. So wird eine Beschichtung mit einer Breitschlitzdüse auf ein Substrat bei ausreichend hohen Bahngeschwindigkeiten ermöglicht, ohne daß Blasen zwischen der Masseschicht und dem Substrat entstehen, ohne daß weitere Eigenschaften des herzustellenden Produktes qualitätsbestimmend beeinträchtigt werden und ohne daß besondere Gefährdungen für das Bedienungspersonal entstehen.

Überraschenderweise hat sich gezeigt, daß Blasen zwischen der Masseschicht und dem Substrat besonders dann gebildet werden, wenn sich Luft zwischen dem Substrat und der Auflegewalze befindet. Bei blasenfreiem Auflegen des Substrats auf die Auflegewalze konnte mit einer höheren Bahngeschwindigkeit beschichtet werden, ohne daß es zur Blasenbildung kam. Das Beschichtungsbild ist deutlich gleichmäßiger als bei einer Beschichtung, bei der während des Herstellungsprozesses das Substrat auf der Auflegewalze nicht blasenfrei aufgelegt war.

Weiterhin kann unerwartet festgestellt werden, daß eine Blasenbildung zwischen der Masseschicht und dem Substrat stark vermindert wird, wenn eine elektrostatische Neutralisation des Substrates im Bahnbereich vor der Auflegewalze erfolgt, und zwar sehr bevorzugt auf der Seite, auf der es infolge von Ladungstrennungsvorgängen zu einer Ladungsanhäufung kommt.

Weiter vorzugsweise kann zwischen der Auflegeelektrode und Entladungselektrode das auf der Transportvorrichtung befindliche Substrat mittels Bestrahlungsvorrichtung durch energiereiche Strahlung, und zwar mit Hilfe von Elektronenstrahlen (ES), UV- oder IR-Strahlen, vernetzt werden. Dies ist insbesondere dann vorteilhaft, wenn es sich bei dem Substrat um eine Klebemasse handelt.

Typische Bestrahlungsvorrichtungen, die bei der erfindungsgemäßen Ausgestaltung des Verfahrens zum Einsatz kommen, stellen Linearkathodensysteme, Scannersysteme beziehungsweise Multilängskathodensysteme dar, sofern es sich um Elektronenstrahlbeschleuniger handelt.
Die Beschleunigungsspannungen liegen vorzugsweise im Bereich zwischen 40 kV und 350 kV, insbesondere zwischen 80 kV und 300 kV. Die Dosisleistungen bewegen zwischen 5 bis 150 kGy, insbesondere 15 bis 90 kGy.
Als UV-Vernetzungsanlagen können insbesondere ein oder mehrere Quecksilbermitteldruckstrahler mit einer Leistung von jeweils bis zu 240 W/cm je Strahler zum Einsatz kommen. Als Dosen werden bevorzugt 10 bis 300 mJ/cm² eingestellt.

Zur Vernetzung oder Polymerisation mit sichtbarem Licht können insbesondere Halogenstrahler zum Einsatz kommen.

Als Substrate können auch Release-Liner mit antiadhäsiven Beschichtungen, auf denen Klebemassen nur wenig haften, eingesetzt werden. Die Trägermaterialien von Release-Linern bestehen typischer Weise aus Papier oder Kunststoffen, wie zum Beispiel PET, PP oder auch PE. Die verwendeten Kunststoffe haben im allgemeinen gute elektrische Isolationseigenschaften und hohe elektrische Durchschlagsfeldstärken.

Bei Papieren werden die elektrischen Eigenschaften dagegen wesentlich durch die dünne antiadhäsive Beschichtung, aber auch durch die Imprägnierung und den Feuchtegehalt, bestimmt. Beim Auftragen der Masse mit Unterstützung durch elektrostatische Aufladung kommt den elektrischen Eigenschaften der aufgebrachten Masse eine stärkere Bedeutung zu. Obwohl meistens elektrische Isolatoren als Massen eingesetzt werden, haben sie bei typischen Beschichtungstemperaturen von 100 °C und mehr oft schon eine so hohe Restleitfähigkeit, daß ein Teil der aufgebrachten Ladungen durch die Masse und das als Release-Liner eingesetzte Papier in die Auflegewalze abfließen, bevor die Walze verlassen wird. Da sich an der Auflegelinie bei nicht zu hoher elektrischer Leitfähigkeit praktisch noch alle Ladungen auf der Masseschicht befinden, sind trotzdem ausreichend hohe Andruckkräfte für eine blasenfreie Beschichtung erreichbar. Bei der anschließenden elektrischen Neutralisation durch das Aufbringen von Gegenladungen muß man allerdings beachten, daß bereits ein Teil der Ladungen abgeflossen ist. Bei kleinen Bahngeschwindigkeiten wird die zur Verfügung stehende Zeit zum Abfließen der Ladungen größer, und es fließen anteilig mehr Ladungen vor dem Erreichen der Ablöselinie ab. Der optimale Höhe der Gegenladungen ist also abhängig von der Bahngeschwindigkeit.

Aus ökonomischen Gründen, aber auch aus Verfahrensgründen, werden für Release-Liner möglichst dünne Reteasebeschichtungen verwendet. Oft werden auch sogenannte "Unterdeckende Beschichtungen" eingesetzt. Hiermit ist gemeint, daß der Träger nicht 100 %ig von der Releasebeschichtung abgedeckt wird. Es hat sich gezeigt, daß bei derartigen Release-Linern eine Neutralisation des beschichteten Substrates wesentlich exakter durchgeführt werden muß, als beispielsweise bei PET- oder PP-Folien mit vollständig abdeckenden Silikonbeschichtungen von 1,5 g/m² und mehr.

Bei doppelseitigen Klebebändern unterscheidet man zwischen der offenen und der abgedeckten Seite des Release-Liners. Die abgedeckte Seite des Release-Liners ist nach dem Abwickeln von der Rolle mit dem Verbund aus erster Klebeschicht, Träger und zweiter Klebschicht bedeckt. Zu einer störungsfreien Weiterverarbeitung nach der Beschichtung bis zur Applikation sollten die Trennkräfte von der Klebemasse auf der offenen kleiner oder gleich, zumindest aber nicht wesentlich größer als die Trennkräfte auf der abgedeckten Seite sein, da es sonst zur Umorientierung des Release-Liners zur anderen Seite kommen kann.

Es werden auch abgestufte Release-Liner angeboten. Mit ihnen kann man sicherstellen, daß die abgedeckte Seite deutlich höhere Trennkräfte hat.
Insbesondere darf bei nicht abgestuften Release-Linem eine Schädigung der offenen Seite bei der Herstellung eines doppelseitigen Klebbandes nur relativ gering sein, wenn man einen Austausch gegen einen ungeschädigten Releaseliners vermeiden möchte.

Zur Herstellung von doppelseitigen Klebbändem kann das Substrat auch aus dem Vorprodukt aus dem ersten Arbeitsgang, nämlich aus einem Release-Liner, einer Klebeschicht und dem Träger bestehen.

Als Substrat beziehungsweise Trägermaterial können weiterhin alle bekannten textilen Träger wie Gewebe, Gewirke, Gelege oder Vliese verwendet werden, wobei unter "Vlies" zumindest textile Flächengebilde gemäß EN 29092 (1988) sowie Nähwirkvliese und ähnliche Systeme zu verstehen sind.
Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasem Partikel aus inerten Gesteinspartikeln, wie zum Beispiel Sand, Kies oder dergleichen, vorhanden.
Die durch die Partikelschicht hindurchgenadelten Haltefasem halten die Deckschicht und die Unterlagsschicht in einem Abstand voneinander und sie sind mit der Deckschicht und der Unterlagsschicht verbunden.
Abstandsgewebe oder -gewirke sind u. a. in zwei Artikeln beschrieben, und zwar einem Artikel aus der Fachzeitschrift "kettenwirk-praxis 3/93", 1993, Seiten 59 bis 63
"Raschelgewirkte Abstandsgewirke"
und
einem Artikel aus der Fachzeitschrift "kettenwirk-praxis 1/94", 1994, Seiten 73 bis 76
"Raschelgewirkte Abstandsgewirke"
auf deren Inhalt hiermit Bezug genommen wird und deren Inhalt Teil dieser Offenbarung und Erfindung wird.

Maschenwaren sind textile Flächengebilde hergestellt aus einem oder mehreren Fäden oder Fadensystemen durch Maschenbildung (Fadenschleifen), im Unterschied zu Webwaren (Geweben), bei der die Fläche durch Verkreuzen von zwei Fadensystemen (Kett- und Schußfäden) hergestellt wird und den Vliesen (Faserverbundstoffen), bei denen ein loser Faserflor durch Wärme, Nadelung, Nähen oder durch Wasserstrahlen verfestigt wird.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, ein Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2 % und 50 % der Fasern des Vlieses Schmelzfasem sind, insbesondere zwischen 5 % und 40 % der Fasern des Vlieses.
Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasem nochmals erhöht wird.
Die Verfestigung des Viiesträgers läßt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleibt, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser inline oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfsstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasem vorgesehen. Die Auswahl ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Als Trägermaterialien finden weiterhin insbesondere Verwendung Laminate und Netze, aber auch Folien (zum Beispiel ein Polyolefin aus der Gruppe der Polyethylene (zum Beispiel HDPE, LDPE, MDPE, LLDPE, VLLDPE, Copolymere des Ethylens mit polaren Comonomeren) und/oder der Gruppe der Polypropylene (zum Beispiel Polypropylen-Homopolymere, Polypropylen-Random-Copolymere oder Polypropylen-Block-Copolymere), mono- oder biaxial orientiertes Polypropylen, Polyester, PVC, PET, Polystyrol, Polyamid oder Polyimid), Schäume, Schaumstoff, beispielsweise aus Polyethylen und Polyurethan, geschäumte Folien und gekreppte und ungekreppte Papiere. Weiter können diese Materialien vor- beziehungsweise nachbehandelt werden. Gängige Vorbehandlungen sind Corona-Bestrahlung, Imprägnieren, Beschichten, Lackieren und Hydrophobieren; geläufige Nachbehandlungen sind Kalandern, Tempern, Kaschieren, Stanzen und Eindecken.

Eine Schwerentflammbarkeit des Trägermaterials und des gesamten Klebebands läßt sich eizielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Als Klebemassen können im wesentlichen alle bekannten Klebemassen mit ausreichend hoher Klebkraft auf dem zu verpackenden Haftgrund eingesetzt werden.

Die Klebemasse des Klebebandes kann aus einer Klebemasse auf Basis von lösemittelhaltigen Naturkautschuk- und Acrylatklebemassen bestehen. Bevorzugt sind Klebemassen auf Basis von Acrylatdispersionen, besonders bevorzugt sind Klebemassen auf Basis von Styrol-lsopren-Styrol-Blockcopolymeren. Diese Klebemassentechnologien sind bekannt und werden in der Klebebandindustrie eingesetzt.

Die Auftragsmenge der Klebemasse auf das Trägermaterial beträgt bevorzugt 15 bis 60 g/qm. In einer weiteren bevorzugten Ausführung wird der Schichtauftrag von 20 bis 30 g/qm eingestellt.

Die Herstellung der Klebebänder kann nach bekannten Verfahren erfolgen. Eine Übersicht über übliche Herstellungsverfahren findet sich beispielsweise in "Coating Equipment", Donatas Satas in Handbook of Pressure Sensitive Adhesive Technology, second edition, edited by Donatas Satas, Van Nostrand Reinhold New York pp. 767-808. Die bekannten Verfahren zum Trocknen und Schneiden der Klebebänder sind ebenfalls im Handbook of Pressure Sensitive Adhesive Technology, Seite 809-874 zu finden.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt
Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder usnytethem eingesetzt.

Der Restlösungsmittel-Gehalt sollte unter 1 Gew.-% betragen.

Weiterhin kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekau- tschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol- (SIS) und Styrol-Butadien-Styrol (SBS) -Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Kohlenwasserstoffharz ist eine Sammelbezeichnung für thermoplastische, farblose bis intensiv braun gefärbte Polymere mit einer Molmasse von im allgemeinen <2000.

Sie lassen sich nach ihrer Provenienz in drei große Gruppen einteilen: In Petroleum-, Kohlenteer- und Terpenharze. Die wichtigsten Kohlenteerharze sind die Cumaron-Inden-Harze. Die Kohlenwasserstoffharze werden durch Polymerisation der aus den Rohstoffen isolierbaren ungesättigten Verbindungen gewonnen.

Zu den Kohlenwasserstoffharze werden auch durch Polymerisation von Monomeren wie Styrol bzw. durch Polykondensationen (bestimmte Formaldehyd-Harze) zugängliche Polymere mit entsprechend niedriger Molmasse gerechnet. Kohlenwasserstoffharze sind Produkte mit in weiten Grenzen von <0 °C (bei 20 °C flüssige Kohlenwasserstoffharze) bis >200 °C variierendem Erweichungsbereich und einer Dichte von ca. 0,9 bis 1,2 g/cm³.

Sie sind löslich in organischen Lösungsmitteln wie Ethern, Estern, Ketonen und chlorierten Kohlenwasserstoffen, unlöslich in Alkoholen und Wasser.

Unter Kolophoniumharz wird ein natürtiches Harz verstanden, das aus dem Rohharz von Koniferen gewonnen wird. Man unterscheidet drei Kolophonium-Typen: Balsamharz als Destillationsrückstand von Terpentinöl, Wurzelharz als Extrakt von Koniferen-Wurzelstöcken und Tallharz, der Destillationsrückstand von Tallöl. Die mengenmäßig größte Bedeutung hat Balsamharz.

Kolophonium ist ein sprödes, transparentes Produkt von roter bis brauner Farbe. Es ist wasserunlöslich, löslich dagegen in vielen organischen Lösungsmitteln wie (chlorierten) aliphatischen und aromatischen Kohlenwasserstoffen, Estern, Ethem und Ketonen sowie in pflanzlichen und mineralischen Ölen. Der Erweichungspunkt von Kolophonium liegt im Bereich von ca. 70 bis 80 °C.

Kolophonium ist ein Gemisch aus ca. 90 % Harzsäuren und 10 % Neutral-Stoffen (Fettsäureester, Terpenalkohole und Kohlenwasserstoffe). Die wichtigsten Kolophonium-Harzsäuren sind ungesättigte Carbonsäuren der Bruttoformel C20H30O2, Abietin-, Neoabietin-, Lävopimar-, Pimar-, Isopimar-, und Palustrinsäure, neben hydrierter und dehydrierter Abietinsäure.
Die Mengenverhältnisse dieser Säuren variieren in Abhängigkeit von der Provenienz des Kolophoniums.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, lsocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Anhand der nachfolgend beschriebenen Figuren wird eine besonders vorteilhafte Ausführung der Erfindung näher erläutert, ohne sich durch die Wahl der gezeigten Figuren unnötig beschränken zu wollen.

Es zeigen
- Figur 1: das erfindungsgemäße Verfahren in einer besonders vorteilhaften Ausführungsform sowie
- Figur 2 bis Figur 8: erfindungsgemäß ausgestaltete Auflegeelektroden in besonders vorteilhaften Ausführungsformen.

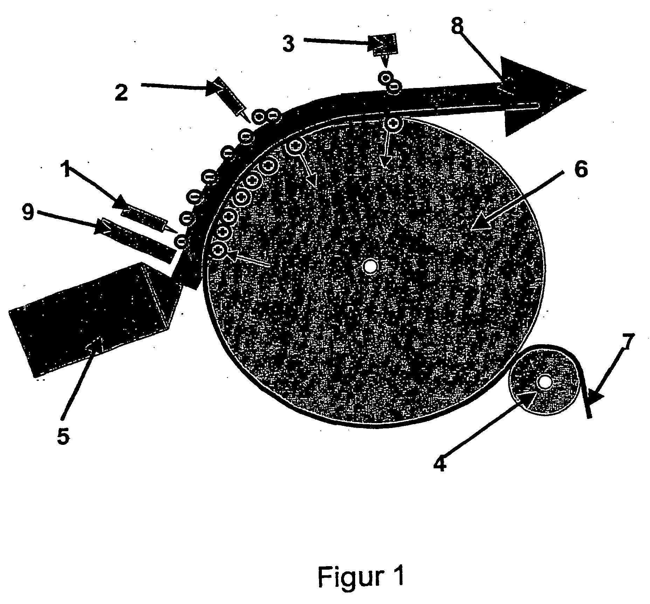

So zeigt Figur 1 eine Vorrichtung, in der auf ein Substrat 7 eine Klebemasse 8 aufgelegt wird. Sie zeigt also ein Verfahren zur Herstellung von Klebebändern.
Die Vorrichtung weist eine Auflegewalze 6 auf, in diesem Fall wird eine geerdete Kühlwalze eingesetzt. Das Substrat 7 ist ein Release-Liner, bestehend aus einer monoaxial gereckten Polypropylenfolie, die beidseitig mit antiadhäsiven Silikonschichten ausgerüstet wurde.
Das Substrat 7 wird über eine Andrückwalze 4 auf die Auflegewalze 6 aufgelegt, was die Luft zwischen Substrat 7 und Auflegewalze 6 entfernt. Über die Beschichtungsdüse 5 wird schließlich die Masse 8, hier eine Klebemasse, aufgebracht, die unter der Auflegelektrode 1 durchgeführt wird.

Mit der Auflegeelektrode 1 werden hier Elektronen einseitig auf die Masse 8 aufgebracht. An der Oberfläche der Auflegewalze 6 stellen sich sofort Gegenladungen ein. Aus dem daraus resultierenden Feld wirkt eine Kraft auf die Masse plus Substrat, die beide Schichten auf die Auflegewalze 6 drückt.
Nach Durchlaufen der Gegenladungselektrode 2 sowie der Entladungselektrode 3 wird das mit der Masse 8 beschichtete Substrat 7 von der Auflegewalze 6 abgenommen.
Die Gegenladungselektrode 2 bringt positive Ladungen auf die Masse 8, die bisher an der Oberfläche vorhandenen Gegenladungen fließen wieder ab, das Feld bricht weitgehend zusammen.
Bei der Entladungselektrode 3 werden schließlich die letzten Ladungen auf der Masse 8 entfernt.

Mit der Blende 9 vor der Auflegeelektrode 1 wird der mit lonen angereicherte Raum begrenzt.

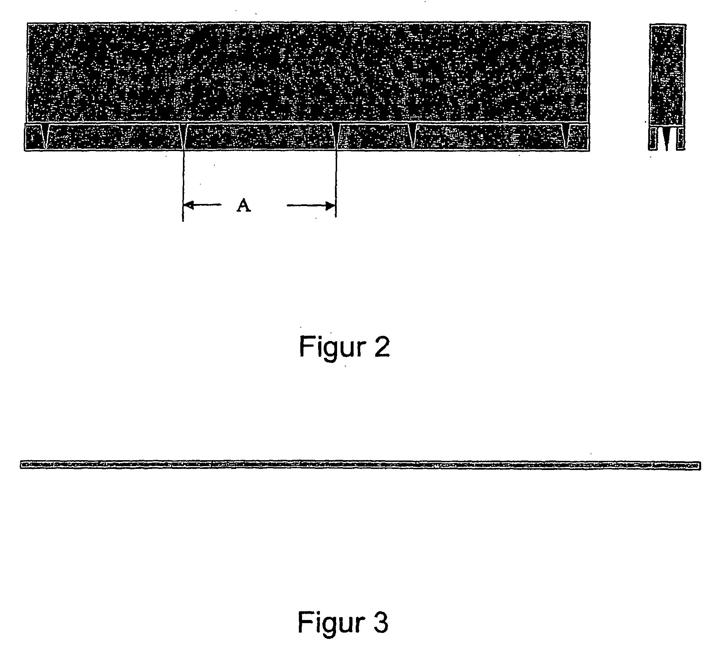

In der Figur 2 ist eine Elektrode gezeigt, die aus einem Träger besteht, an dem in einer Reihe mehrere Spitzen angeordnet sind, die wiederum in regelmäßigen Abständen angeordnet sind.
Der gezeigte Abstand A beträgt in einer bevorzugten Ausführungsform 20 mm.

In der Figur 3 ist eine Elektrode gezeigt, die einfach aus einem quer über die Düsenbreite gespannten Draht besteht.

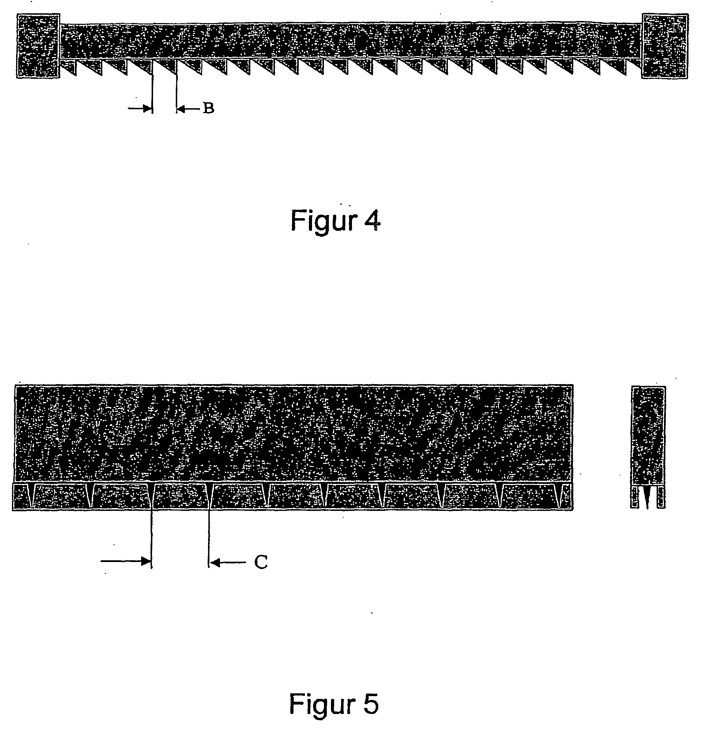

In der Figur 4 ist eine sogenannte Sägeblatt-Elektrode offenbart. Diese besteht aus einem Träger, an dem einseitig gleichförmige Zacken vorhanden sind. Die Zacken weisen vorzugsweise einen Abstand B von 1 mm auf.

Die Figur 5 zeigt ebenfalls eine Spitzenelektrode, ähnlich der aus Figur 2, wobei der Abstand C zwischen den Spitzen auf ungefähr 5 mm verringert ist.

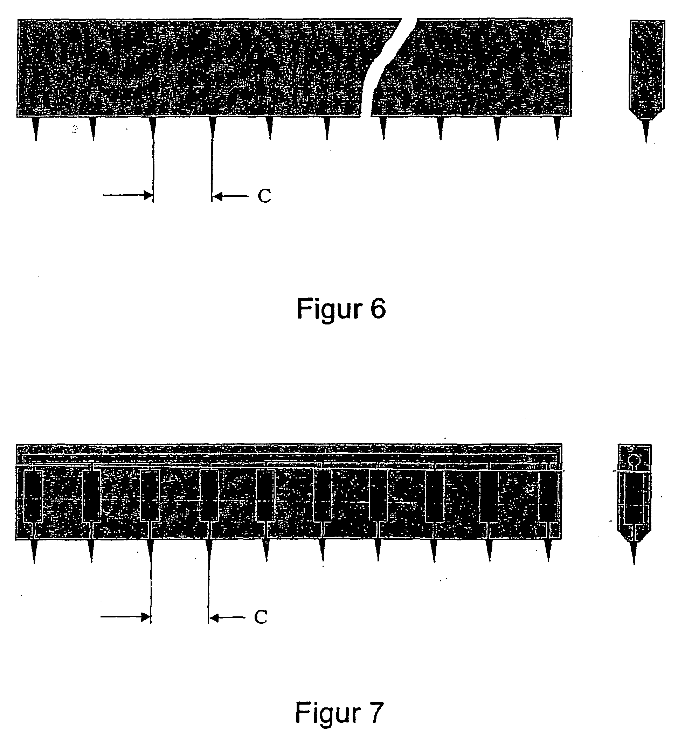

Die Figur 6 stellt eine Abwandlung der Spitzenelektrode aus Figur 5 dar, und zwar ist bei dieser Elektrode der Berührungsschutz, der die Elektroden normalerweise umgibt, entfernt worden.

Die Figur 7 zeigt die Elektrode aus Figur 6, bei der die Spitzen über Einzelwidderstände angesteuert werden.

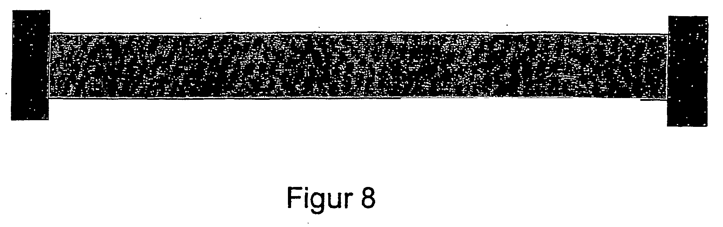

Figur 8 offenbart schließlich eine sogenannte Messer-Elektrode, die aus einem äußerst dünnen Träger besteht

### Beispiele

### Beispiel 1

Eine Acrylatklebemasse wurde in Lösungsmitteln polymerisiert und in einem Extruder aufkonzentriert. In einem weiteren Extruder wurden Harze Alterungsschutzmittel und andere Additive zugemischt. Die Beschichtung der Masse erfolgte über eine Schmelzepumpe durch eine Breitschlitzdüse (Fa. Extrusion Dies Inc./USA), mit 35 cm Beschichtungsbreite auf eine 70 um starke Polypropylentrennfolie, die dazu mit einer Andruckwalze auf eine temperierbare Auflegewalze gelegt wurde. Auf die beschichtete Seite dieser beidseitig mit 0,5 g/m² starken antiadhäsiven Silikonschichten ausgerüsteten Folie wurde in einer folgenden Laminierstation eine 12 µm starke Polyesterfolie kaschiert. Danach wurde das Laminat aufgewickelt.

Ziel des Versuches war es, die erreichbaren Beschichtungsgeschwindigkeiten bei einem Masseauftrag von 85 g/m² ohne Blasen zwischen Masse und Substrat mit Hilfe verschiedener Verfahren zur Unterstützung des Masseauflegens zu erhöhen.
Dabei durften die antiadhäsiven Eigenschaften der Trennfolie aber nicht wesentlich beeinträchtigt werden.

Bestimmt wurde die Blasenbildung zum einen inline mit einem Camcorder, einer starken Lichtquelle und einem Monitor mit Hilfe von Standbildern bei Belichtungszeiten zwischen 100 und 1000 Mikrosekunden und zum anderen durch das Betrachten von Mustern nach dem Anhalten der Bahn.

Mit einer vorhanden Vakuumbox (Fa. Extrusion Dies Inc./USA), mit der ein Unterdruck zwischen Masse und Substrat beim Auflegen erzeugt wurde, konnte nur eine Bahngeschwindigkeit von ca. 15 m/min ohne Blasen ereicht werden.

Im weiteren Verlauf des Versuches wurden verschiedene Elektroden über der Auflagelinie der Masse quer zur Bahnrichtung aufgespannt. Die jeweils eingesetzte Elektroden (Auflegeelektroden) wurden, zur Abscheidung von elektrischen Ladungen auf die Masseoberfläche im Bereich des Auflegpunktes, mit Hochspannungen zwischen 8 und 28 kV beaufschlagt. Verwendet wurde dazu ein Hochspannungsgenerator der Fa. Eltex (Typ KNH34).

Folgende, wesentlich höhere Bahngeschwindigkeiten als mit der Vakuumbox konnten mit verschiedenen Elektrodenformen blasenfrei erreicht werden:

| | |
|---|---|
| Drahtelektrode (Eigenbau) | 35 m/min |
| Messerelektrode (Leihgerät von der Fa. Eltex) | 45 m/min |
| Sägeblattelektrode (Eigenbau mit Sägeblatt) | 65 m/min |
| Nadelelektrode (Typ: R130A von Fa. Eltex) | 75 m/min |

Es wurden allerdings unabhängig vom Elektrodentyp einige unerwünschte Nebenerscheinungen festgestellt. Schon bei leichter Verdunklung des Raumes während der Beschichtung war eine Coronaentladung an der Ablöselinie von der Auflegewalze zwischen der Walze und der Trennfolie sichtbar.

Trotz guter Ausrüstung der Beschichtungsanlage mit aktiven und passiven elektrostatischen Entladevorrichtungen traten teilweise Entladungsblitze innerhalb aufgewickelten Ballen auf.

Außerdem wurden deutliche Verschlechterungen der antiadhäsiven Eigenschaften der Trennfolie, insbesondere bei der der Walze zugerichteten Seite festgestellt.

Ermittelt wurde dieses mit der folgenden Meßmethode.

### Messung der Trennkraft

Auf die zu messende Seite des Release-Liners wird ein doppelseitiges Prüfklebeband blasenfrei aufgelegt und mit einer 2 kg Stahlrolle durch fünfmaliges Überrollen angepreßt. Anschließend erfolgt eine Lagerung von einer Woche in einer Wärmekammer bei 70 °C. Zur Messung der Abzugskraft (Trennkraft) wird die dem Release-Liner abgewandte Seite des Prüfbands auf einer Stahlschiene fixiert. Anschließend wird der auf dem Prüfklebeband verklebte Release-Liner unter einem Winkel von 180° mit einer Geschwindigkeit von 300 mm/min abgezogen. Die dafür erforderliche Zugkraft (in cN/cm) wird an einer Zugprüfmaschine bei standardisierten Bedingungen (23 °C, 50 % Luftfeuchtigkeit) gemessen.

Angegeben werden das Minimum, das Maximum und der Mittelwert aus fünf Einzelmessungen.

| Gemessene Trennkräfte mit der angegebenen Meßmethode | | | |
|---|---|---|---|
| | Minimum | Maximum | Mittelwert |
| ungeschädigtes Referenzmuster | 7 cN/cm | 8 cN/cm | 7 cN/cm |
| Offene Seite nach der Beschichtung | 39 cN/cm | 125 cN/cm | 58 cN/cm |
| Abgedeckte Seite nach der Beschichtung | 19 cN/cm | 33 cN/cm | 25 cN/cm |

### Beispiel 2

Ziel dieses Versuches war es, die in Beispiel 1 genannten Produktschädigungen und sicherheitsrelevanten Punkte wie Entladungsblitze im aufgewickelten Ballen zu beseitigen.

In diesem Versuch wurde der gleiche Aufbau wie in Beispiel 1 gewählt. Zum Aufladen der Masseschicht wurde jedoch nur die Nadelelektrode als Auflegeelektrode verwendet. Zusätzlich wurde eine gleiche zweite Nadelelektrode (Gegenladungselektrode) im Bereich zwischen der Masseauflagelinie und der Abzugslinie des beschichteten Substrates von der Auflegewalze angebracht. Die Auflegeelektrode wurde bei einer Bahngeschwindigkeit von 75 m/min mit einer negativen Hochspannung von -15 kV beaufschlagt. Der Abstand der Nadelspitzen von der Walzenoberfläche, die Position der Elektrode in Bahnlaufrichtung und der Neigungswinkel der Elektrode zur Tangente der Auflegewalze wurden optimiert, bis keine Blasen zwischen Masse und Substrat mehr zu beobachten waren. Dabei betrug der Nadelabstand ca. 5 mm von der Walzenoberfläche, die Position der Elektrode war ca. 8 mm in Bahnlaufrichtung hinter dem Auflegepunkt und der Neigungswinkel zur Tangente der Auflegewalze betrug 90°.

Die Gegenladungselektrode wurde mit einer entgegengesetzten, also positiven, Hochspannung von +13,2 kV belegt, so daß der Absolutwert des Elektrodenstromes gleich dem der Auflegeelektrode war und das beschichtete Substrat damit vor dem Verlassen der Walze elektrostatisch neutralisiert wurde. Der Abstand der Nadelspitzen der Gegenladungselektrode von der Walzenoberfläche betrug ca. 12 mm.

Bei Verdunklung des Raumes während der Beschichtung konnte keine Coronaentladung an der Ablöselinie von der Auflegewalze zwischen der Walze und der Trennfolie beobachtet werden.

Die vorhandene Ausrüstung der Beschichtungsanlage mit aktiven und passiven elektrostatischen Entladevorrichtungen war bei dieser Fahrweise ausreichend und es traten keine Entladungsblitze innerhalb von aufgewickelten Ballen auf. Auch konnten die Ballen gefahrlos berührt werden.

Die elektrostatische Aufladung des beschichteten Substrates nach dem Verlassen der Auflegewalze wurde mit Hilfe eines Elektrofeldmeters (Fa. Eltex Typ: EM 02) bestimmt. Dazu wurde das Elektrofeldmeter in Bahnlaufrichtung ca. 30 cm entfernt von der Auflegewalze in einem Abstand von 5 cm über der Bahn gehalten. Danach wurde die Hochspannung der Gegenladungselektrode leicht variiert, bis ein elektrisches Feld um ± 0 kV angezeigt wurde. Das gemessene Feld schwankte jedoch noch um ca. ± 200 kV/m mit der Zeit und auch über die Breite der Bahn.

Mit der oben beschriebenen Meßmethode wurde auf der abgedeckten Seite der Trennfolie nur eine geringe Beeinträchtigung der antiadhäsiven Eigenschaften festgestellt. Die der Auflegewalze zugewandte Seite der Trennfolie zeigte deutlich geringe Erhöhung der Trennkraft als in Beispiel 1. Die Einzelmeßwerte hatten jedoch relativ starke Schwankungen.

| Gemessene Trennkräfte mit der in Beispiel 1 angegebenen Meßmethode | | | |
|---|---|---|---|
| | Minimum | Maximum | Mittelwert |
| Ungeschädigtes Referenzmuster | 7 cN/cm | 9 cN/cm | 8 cN/cm |
| Offene Seite nach der Beschichtung | 20 cN/cm | 55 cN/cm | 35 cN/cm |
| Abgedeckte Seite nach der Beschichtung | 15 cN/cm | 20 cN/cm | 18 cN/cm |

### Beispiel 3

Ziel dieses Versuches war es, die in Beispiel 2 genannten Produktschädigungen weiter zu reduzieren.

In diesem Versuch wurden der gleiche Aufbau und die gleichen Bedingungen wie in Beispiel 2 gewählt. Über der Ablöselinie der Bahn von der Auflegewalze wurde jedoch zusätzlich eine aktive Entladungselektrode (Fa. Eltex Typ: R51A), die mit 8 kV Wechselstrom bei einer Frequenz von 50 Hz aus einem Netzteil (Fa. Eltex Typ: ES52) gespeist wurde.

Mit der oben beschriebenen Meßmethode wurden auf der abgedeckten Seite der Trennfolie keine deutlichen Unterschiede zu Beispiel 2 festgestellt. Die der Auflegewalze zugewandte Seite der Trennfolie zeigte im Mittel ein geringere Erhöhung der Trennkräfte als in Beispiel 2 und die Einzelwerte hatte eine geringere Streuung.

| Gemessene Trennkräfte mit der in Beispiel 1 angegebenen Meßmethode | | | |
|---|---|---|---|
| | Minimum | Maximum | Mittelwert |
| ungeschädigtes Referenzmuster | 7 cN/cm | 10 cN/cm | 9 cN/cm |
| Offene Seite nach der Beschichtung | 18 cN/cm | 35 cN/cm | 28 cN/cm |
| Abgedeckte Seite nach der Beschichtung | 14 cN/cm | 20 cN/cm | 17 cN/cm |

### Beispiel 4

Ziel dieses Versuches war es, die in den obigen Beispielen genannten Produktschädigungen weiter zu reduzieren.

In diesem Versuch wurde der gleiche Aufbau wie in Beispiel 3 gewählt. Zum Aufladen der Masseschicht wurde jedoch nicht nur eine Nadetelektrode als Auflegeelektrode verwendet. In Bahnlaufrichtung vor der Auflegeelektrode wurde eine Blende aus elektrisch isolierendem Material angebracht, wodurch der mit lonen gefüllte Raum im Bereich der Auflegeelektrode zur Düsenseite hin bis auf den Spalt über der Auflegewalze zur Blende begrenzt wrd. Auf der der Auflegeelektrode abgewandten Seite der Blende wurde ein geerdetes elektrisch leitendes Blech angebracht.

Mit der Blende aus einem elektrischen Isolatormaterial konnte eine beobachtete Coronaerscheinung vor der Auflegelinie durch die Masseschicht auf das Substrat reduziert werden.

Mit der Anordnung konnte die Schädigung entsprechend Beispiel 3 weiter reduziert werden und auch die Beschichtungsgeschwindigkeit konnte leicht erhöht werden.

| Gemessene Trennkräfte mit der in Beispiel 1 angegebenen Meßmethode | | | |
|---|---|---|---|
| | Minimum | Maximum | Mittelwert |
| ungeschädigtes Referenzmuster | 7 cN/cm | 8 cN/cm | 7 cN/cm |
| Offene Seite nach der Beschichtung | 17 cN/cm | 30 cN/cm | 24 cN/cm |
| Abgedeckte Seite nach der Beschichtung | 12 cN/cm | 18 cN/cm | 15 cN/cm |

### Beispiel 5

Ziel dieses Versuches war es, die in den obigen Beispielen genannten Produktschädigungen weiter zu reduzieren.

In diesem Versuch wurde der gleiche Aufbau wie in Beispiel 3 gewählt. Zum Aufladen der Masseschicht wurde jedoch nicht nur eine Nadelelektrode als Auflegeelektrode verwendet, sondern zwei in Bahnrichtung direkt hintereinander. Zusätzlich wurden die vom Hersteller als Verletzungsschutz vorgesehenen Stege auf beiden Seiten der Nadelreihe beseitigt und die Elektroden in V-Form zueinander geneigt, so daß der Abstand der Nadelreihen der beiden Elektroden ca. 10 mm betrug.

In seitliche Richtung wurden die Elektroden um 2,5 mm gegeneinander verschoben, so daß bei dem vom Hersteller gegebenen Nadelabstand von 5 mm aus Bahnsicht ein Abstand von 2,5 mm geschaffen wurde.

Die vordere Auflegeelektrode wurde bei einer Bahngeschwindigkeit von 75 m/min mit einer negativen Hochspannung von -11 kV beaufschlagt und die hintere mit -13,2 kV.
Die Gegenladungselektrode wurde mit einer entgegengesetzten, also positiven, Hochspannung von +13,8 kV belegt, so daß der Absolutwert des Elektrodenstromes gleich dem der Auflegeelektrode war und das beschichtete Substrat damit vor dem Verlassen der Walze elektrostatisch neutralisiert wurde.

Mit der Anordnung konnte die Schädigung entsprechend Beispiel 3 weiter reduziert werden, und auch die Beschichtungsgeschwindigkeit konnte leicht erhöht werden.

| Gemessene Trennkräfte mit der in Beispiel 1 angegebenen Meßmethode | | | |
|---|---|---|---|
| | Minimum | Maximum | Mittelwert |
| Ungeschädigtes Referenzmuster | 9 cN/cm | 11 cN/cm | 10 cN/cm |
| Offene Seite nach der Beschichtung | 16 cN/cm | 30 cN/cm | 25 cN/cm |
| Abgedeckte Seite nach der Beschichtung | 12 cN/cm | 19 cN/cm | 16 cN/cm |

### Beispiel 6

Ziel dieses Versuches war es, die in den obigen Beispielen genannten Produktschädigungen weiter zu reduzieren.

In diesem Versuch wurde der gleiche Aufbau wie in Beispiel 4 gewählt.

Zwischen Abwicklung und Auflegewalze wurde hinter jeder Umlenkwalze auf der Walzenseite in einem Abstand von 10 cm in Bahnlaufrichtung hinter der Walze ein Entladungsstab plaziert.

In der Abwicklung wurde ein aktiver Entladungsstab (Fa. Eltex, Typ. R51A) so plaziert, daß er in den Wickelspalt zeigte. Dieser Entladungsstab wurde von einem 8 kV Netzteil (Fa. Eltex, Typ. ES52) versorgt, während die anderen Entladungsstäbe (Fa. Eltex, Typ. R51A hinter den Umlenkwalzen von 5 kV Netzteilen (Fa. Eltex, Typ. ES51) versorgt wurden. Zusätzlich wurde darauf geachtet, daß die abzuwickelnden Ballen nicht schon von Vorprozessen aufgeladen waren .

Außerdem wurde die Beschichtung der Andruckwalze für das Substrat auf die Auflegewalze gegen eine elektrisch leitfähige ausgetauscht.

| Gemessene Trennkräfte mit der in Beispiel 1 angegebenen Meßmethode | | | |
|---|---|---|---|
| | Minimum | Maximum | Mittelwert |
| Ungeschädigtes Referenzmuster | 7 cN/cm | 10 cN/cm | 9 cN/cm |
| Offene Seite nach der Beschichtung | 14 cN/cm | 26 cN/cm | 22 cN/cm |
| Abgedeckte Seite nach der Beschichtung | 11 cN/cm | 18 cN/cm | 14 cN/cm |

### Beispiel 7

Ziel dieses Versuches war es, eine unzulässige Erwärmung des Substrates und der Masse bei einer auf die Beschichtung folgenden UV-Vernetzung zu vermeiden.

Zur Herstellung eines Klebebandes für die Kabelbandagierung wurde ein offenes "Malivlies" von der Firma Karl Meyer auf einer Auflegewalze mit einer Acrylat-Hotmeltmasse der Firma BASF beschichtet. Die Auftragung der Klebemasse in einer Stärke von 50 g/m² erfolgte mit einer Breitschlitzdüse, die einen Abstand von ca. 10 mm zur Auflegewalze hatte und auf 90 °C temperiert war. Die Auflegewalze hatte einen Durchmesser von 500 mm und eine Temperatur von 40 °C.

Die Masse legte sich dabei auf das Vlies und sickerte kaum ein. Über einen UV-Mitteldruckstrahler mit einer elektrischen Leistung von 160 W/cm von der Firma IST, der über der Auflegewalze, auf der gegenüberliegenden Seite zur Düse, angebracht war, erfolgte eine UV-Vernetzung bei einer Bahngeschwindigkeit von 10 m/min. Nach der UV-Vernetzung wurde das Klebeband über eine antiadhäsive Andruckwalze von der Auflegewalze abgenommen und anschließend aufgewickelt. Eine wesentliche Aufgabe der Abnahmewalze war es, die Klebemasse tiefer in das offene Gewebe zu drücken.

Aufgrund der starken Erwärmung schrumpfte das Vlies um ca. 8 %. Außerdem trat durch die hohe Massetemperatur Masseumspulen auf die antiadhäsive Andruckwalze auf.

Im weiteren Verlauf des Versuches wurden analog zum Beispiel 3 eine Auflegeelektrode über der Auflegelinie der Masse auf das Substrat und eine Gegenelektrode vor dem UV-Strahler angebracht. Eine aktive Entladelektrode wurde hinter der Abnahmewalze, in den Spalt zwischen der Walze und der Masseseite zeigend, angebracht.

Mit der Auflegeelektrode aufgebrachte Ladungen pressen zum einen das Substrat fester auf die Auflegewalze, so daß der Wärmeübergang zur Walze deutlich verbessert wurde, und zum anderen wurde Masse vorteilhafter Weise in das Vlies gedrückt, wobei die Stärke über die an die Auflegeelektrode angelegte Hochspannung steuerbar war.

Mit dem elektrostatischen Auflegen waren die gemessenen Temperaturen insbesondere nach dem UV-Strahler und vor der Abnahmewalze, wie in der folgenden Tabelle dargestellt, deutlich niedriger.

| Mit und ohne elektrostatische Aufladung gemessene Bahntemperaturen | | |
|---|---|---|
| Aufladeelektroden | ohne | mit |
| Temperatur nach Austritt Düse | 86 °C | 86 °C |
| Temperatur 25 cm nach Düse | 54 °C | 44 °C |
| Temperatur vor UV-Strahler | 50 °C | 42 °C |
| Temperatur nach Strahler | 97 °C | 82 °C |
| Temperatur vor Abnahmewalze | 78 °C | 46 °C |
| Temperatur nach Abnahmewalze | 52 °C | 42 °C |

Durch die geringere Erwärmung schrumpfte das Vlies nur noch um 2 % und auch das Masseumspulen auf die antiadhäsive Abnahmewalze wurde nicht mehr beobachtet. Zusätzlich wurde eine als Andruckwalze ausgeführte Walze eigentlich nicht mehr benötigt, da das Eindrücken das Masse bereits durch die Auflegeelektrode bewerkstelligt wurde.

## Patentansprüche

1. Verfahren zur Herstellung von bahnförmigen, zumindest zweischichtigen Produkten, bei welchem eine aus einer Auftragsvorrichtung austretende Masse als Schicht unter Aufbringung elektrostatischer Ladungen auf ein bahnförmiges Substrat aufgetragen wird, welches auf einer Transportvorrichtung geführt wird, wobei das mit der Masse beschichtete Substrat vor dem Verlassen der Auftragsvorrichtung elektrostatisch neutralisiert wird.

2. Verfahren nach Anspruch 1, **dadurch gekennzeichnet, daß**
die Auftragsvorrichtung als Düse, insbesondere Breitschlitzdüse, ausgestaltet ist.

3. Verfahren nach Anspruch 1 oder 2, **dadurch gekennzeichnet, daß**
die Transportvorrichtung als Auflegewalze ausgestaltet ist, die insbesondere geerdet und/oder temperierbar ausgeführt ist.

4. Verfahren nach zumindest einem der vorangehenden Ansprüche, **dadurch gekennzeichnet, daß**
die Masse mittels zumindest einer Aufladungselektrode elektrostatisch aufgeladen wird, welche sich insbesondere über der Transportvorrichtung, bevorzugt Auflegewalze, im Bereich der Auflagelinie der Masseschicht befindet.

5. Verfahren nach zumindest einem der vorangehenden Ansprüche, **dadurch gekennzeichnet, daß**
als Auflegeelektrode zwei in Bahnrichtung direkt hintereinander angeordnete Nadelelektroden verwendet werden, bei der die Nadeln insbesondere seitlich um einen halben Nadelabstand versetzt sind.

6. Verfahren nach zumindest einem der vorangehenden Ansprüche, **dadurch gekennzeichnet, daß**
das mit der Masse beschichtete Substrat mittels zumindest einer Gegenladungselektrode vor dem Verlassen der Transportvorrichtung, bevorzugt Auflegewalze, elektrostatisch neutralisiert wird, wobei sich die Gegenelektrode insbesondere über der Transportvorrichtung, bevorzugt Auflegewalze, im Bereich zwischen der Auflagelinie der Masseschicht und der Abzugslinie des beschichteten Substrats befindet.

7. Verfahren nach zumindest einem der vorangehenden Ansprüche, **dadurch gekennzeichnet, daß**
das mit der Masse beschichtete Substrat mittels zumindest einer Entladungselektrode beim Verlassen der Transportvorrichtung, bevorzugt Auflegewalze, elektrostatisch neutral gehalten wird, wobei sich die Entladungselektrode insbesondere über der Transportvorrichtung, bevorzugt Auflegewalze, im Bereich der Abzugslinie des beschichteten Substrats befindet.

8. Verfahren nach zumindest einem der vorangehenden Ansprüche, **dadurch gekennzeichnet, daß**
das Substrat mit einer Andruckwalze auf die Transportvorrichtung, bevorzugt Auflegewalze, gelegt und/oder mit einer Abnahmewalze von der Transportvorrichtung, bevorzugt Auflegewalze, abgenommen wird.

9. Verfahren nach zumindest einem der vorangehenden Ansprüche, **dadurch gekennzeichnet, daß**
in Bahnlaufrichtung zwischen der Auftragsvorrichtung und der Auflegeelektrode eine Blende aus elektrisch isolierendem Material angebracht ist.

10. Verfahren nach zumindest einem der vorangehenden Ansprüche, **dadurch gekennzeichnet, daß**
das Substrat vor dem Beschichten elektrostatisch neutralisiert wird.

11. Verfahren nach zumindest einem der vorangehenden Ansprüche, **dadurch gekennzeichnet, daß**
die elektrische Spannung der Transportvorrichtung, bevorzugt Auflegewalze, 1 bis 40 kV, insbesondere 2 bis 15 kV beträgt.

12. Verfahren nach Anspruch 1, **dadurch gekennzeichnet, daß** die Masse auf dem Substrat vor dem Verlassen der Transporteinrichtung, bevorzugt Auflegewalze, vernetzt wird, insbesondere mittels Elektronenstrahlen, UV-Strahlen, sichtbarem Licht oder einer Kombination aus diesen und/oder thermisch.

13. Verfahren nach zumindest einem der vorangehenden Ansprüche, **dadurch gekennzeichnet, daß**
das Substrat ein Trägemiaterial für ein Klebeband und/oder die Masse eine Klebemasse ist.

14. Verfahren nach zumindest einem der vorangehenden Ansprüche, **dadurch gekennzeichnet, daß**
das Substrat ein Releaseliner für ein Klebeband und/oder die Masse eine Klebemasse ist

15. Verfahren nach zumindest einem der vorangehenden Ansprüche, **dadurch gekennzeichnet, daß** das Substrat ein Vorprodukt, bestehend aus Release-Liner, Klebemasse und Träger, für ein doppelseitiges Klebeband und die Masse eine Klebemasse ist.

16. Verfahren nach zumindest einem der vorangehenden Ansprüche, **dadurch gekennzeichnet, daß**
als Masse eingesetzt werden Acrylat-, Naturkautschuk-, Synthesekautschuk- oder EVA-Klebemassen.

## Claims

1. Process for producing products in web form comprising at least two layers, in which a composition emerging from an applicator is applied as a layer to a substrate in web form which is guided on a transport means, said application taking place with application of electrostatic charges, the substrate coated with the composition being electrostatically neutralized before departing the applicator.

2. The process as claimed in Claim 1, wherein said applicator is configured as a die, in particular a slot die.

3. The process as claimed in Claim 1 or 2, wherein said transport means is configured as a lay-on roller, which in particular is of earthed and/or temperature-controllable design.

4. The process as claimed in at least one of the preceding claims, wherein the composition is electrostatically charged by means of at least one charging electrode which is located in particular above the transport means, preferably lay-on roller, in the region of the lay-on line of the composition coat.

5. The process as claimed in at least one of the preceding claims, wherein as a lay-on electrode two needle electrodes arranged directly following one another in the web direction are used, the needles in particular being laterally offset by half the distance of a needle.

6. The process as claimed in at least one of the preceding claims, wherein the substrate coated with the composition is electrostatically neutralized by means of at least one countercharging electrode before departing the transport means, preferably lay-on roller, the counterelectrode being located in particular over the transport means, preferably lay-on roller, in the region between the lay-on line of the composition coat and the take-off line of the coated substrate.

7. The process as claimed in at least one of the preceding claims, wherein the substrate coated with the composition is kept electrostatically neutral by means of at least one discharge electrode on departing the transport means, preferably lay-on roller, the discharge electrode being located in particular over the transport means, preferably lay-on roller, in the region of the take-off line of the coated substrate.

8. The process as claimed in at least one of the preceding claims, wherein the substrate is placed with a contact roller onto the transport means, preferably lay-on roller, and/or is removed from the transport means, preferably lay-on roller, with a take-off roller.

9. The process as claimed in at least one of the preceding claims, wherein a baffle made of electrically insulating material is mounted in the running direction of a web between the applicator and the lay-on electrode.

10. The process as claimed in at least one of the preceding claims, wherein the substrate is electrostatically neutralized prior to coating.

11. The process as claimed in at least one of the preceding claims, wherein the electrical voltage of the transport means, preferably lay-on roller, is from 1 to 40 kV, in particular from 2 to 15 kV.

12. The process as claimed in Claim 1, wherein the composition on the substrate is crosslinked before departing the transport means, preferably lay-on roller, in particular by means of electron beams, UV rays, visible light or a combination of these and/or thermally.

13. The process as claimed in at least one of the preceding claims, wherein the substrate is a carrier material for an adhesive tape and/or the composition is an adhesive.

14. The process as claimed in at least one of the preceding claims, wherein the substrate is a release liner for an adhesive tape and/or the composition is an adhesive.

15. The process as claimed in at least one of the preceding claims, wherein the substrate is an initial product consisting of release liner, adhesive, and carrier for a double-sided adhesive tape and the composition is an adhesive.

16. The process as claimed in at least one of the preceding claims, wherein said composition comprises acrylic, natural rubber, synthetic rubber or EVA adhesives.

## Revendications

1. Procédé de fabrication de produits en forme de bande, au moins en deux couches, dans lequel une pâte qui sort d'un dispositif d'application est appliquée en couche sur un substrat en forme de bande avec application de charges électrostatiques, le substrat étant guidé sur un dispositif de transport, le substrat revêtu de la pâte étant neutralisé électrostatiquement avant de quitter le dispositif d'application.

2. Procédé selon la revendication 1, **caractérisé en ce que** le dispositif d'application est configuré comme ajutage et en particulier comme ajutage à large fente.

3. Procédé selon la revendication 1 ou 2, **caractérisé en ce que** le dispositif de transport est configuré comme cylindre d'application qui est en particulier raccordé à la terre et/ou dont la température peut être contrôlée.

4. Procédé selon au moins l'une quelconque des revendications précédentes, **caractérisé en ce que** la pâte est chargée électrostatiquement au moyen d'au moins une électrode de charge qui est située en particulier au-dessus du dispositif de transport, de préférence le cylindre d'application, dans la zone de la ligne d'application de la couche de pâte.

5. Procédé selon au moins l'une quelconque des revendications précédentes, **caractérisé en ce que** comme électrode d'application, on utilise deux électrodes à aiguilles disposées directement l'une derrière l'autre dans le sens de la bande et dont les aiguilles sont décalées en particulier latéralement d'un demi-intervalle entre aiguilles.

6. Procédé selon au moins l'une quelconque des revendications précédentes, **caractérisé en ce que** le substrat revêtu de la pâte est neutralisé électrostatiquement au moyen d'au moins une électrode de contre-charge avant de quitter le dispositif de transport, de préférence le cylindre d'application, la contre-électrode étant située en particulier au-dessus du dispositif de transport, de préférence du cylindre d'application, dans la zone située entre la ligne d'application de la couche de pâte et la ligne d'enlèvement du substrat revêtu.

7. Procédé selon au moins l'une quelconque des revendications précédentes, **caractérisé en ce que** le substrat revêtu de la pâte est neutralisé électrostatiquement au moyen d'au moins une électrode de décharge lorsqu'il quitte le dispositif de transport, de préférence le cylindre d'application, l'électrode de décharge étant située en particulier au-dessus du dispositif de transport, de préférence du cylindre d'application, dans la zone de la ligne d'enlèvement du substrat revêtu.

8. Procédé selon au moins l'une quelconque des revendications précédentes, **caractérisé en ce que** le substrat est appliqué sur le dispositif de transport, de préférence le cylindre d'application, à l'aide d'un cylindre de poussée et/ou est enlevé du dispositif de transport, de préférence du cylindre d'application, à l'aide d'un cylindre d'enlèvement.

9. Procédé selon au moins l'une quelconque des revendications précédentes, **caractérisé en ce qu'**un écran en un matériau électriquement isolant est installé entre le dispositif d'application et l'électrode d'application dans le sens d'avancement de la bande.

10. Procédé selon au moins l'une quelconque des revendications précédentes, **caractérisé en ce que** le substrat est neutralisé électrostatiquement avant le revêtement.

11. Procédé selon au moins l'une quelconque des revendications précédentes, **caractérisé en ce que** la tension électrique appliquée sur le dispositif de transport, de préférence le cylindre d'application, est de 1 à 40 kV et en particulier de 2 à 15 kV.

12. Procédé selon la revendication 1, **caractérisé en ce que** la pâte est réticulée sur le substrat avant que ce dernier quitte le dispositif de transport, de préférence le cylindre d'application, en particulier au moyen de faisceaux d'électrons, d'irradiation par UV, par lumière visible ou par une combinaison de ces moyens, et/ou thermiquement.

13. Procédé selon au moins l'une quelconque des revendications précédentes, **caractérisé en ce que** le substrat est un matériau de support pour un ruban adhésif et/ou la pâte est une pâte adhésive.

14. Procédé selon au moins l'une quelconque des revendications précédentes, **caractérisé en ce que** le substrat est une feuille de libération d'un ruban adhésif et/ou la pâte est une pâte adhésive.

15. Procédé selon au moins l'une quelconque des revendications précédentes, **caractérisé en ce que** le substrat est un pré-produit constitué d'une feuille de libération, d'une pâte adhésive et d'un support pour un ruban adhésif double face, la pâte étant une pâte adhésive.

16. Procédé selon au moins l'une quelconque des revendications précédentes, **caractérisé en ce que** comme pâte, on utilise des pâtes adhésives à base d'acrylate, de caoutchouc naturel, de caoutchouc de synthèse ou d'EVA.
